# EUROPEAN PATENT APPLICATION

(11) **EP 4 757 009 A1**
(43) Date of publication of application: **10.06.2026**
(21) Application number: 25213909.2
(22) Date of filing: 06.11.2025
(51) Int. Cl.: H01M 50/103, H01M 50/147, H01M 50/186, H01M 50/188, H01M 50/474, H01M 50/531, H01M 50/548

(54) **POWER STORAGE DEVICE AND METHOD OF MANUFACTURING SAME**

(30) Priority: 05.12.2024 JP 2024212019
(71) Applicant: Prime Planet Energy & Solutions, Inc., Tokyo 103-0022 (JP)
(72) Inventor: TANAKA, Shunsuke, Tokyo,, 103-0022 (JP); HAGIMOTO, Yusuke, Tokyo,, 103-0022 (JP)
(74) Representative: Kuhnen & Wacker Patent- und Rechtsanwaltsbüro PartG mbB

(57) **Abstract**

The present method of manufacturing a power storage device includes: producing an electrode assembly (200) having a first tab (220) and a second tab (270); after the producing the electrode assembly (200), accommodating the first tab (220) and the second tab (270) in a tab accommodation space (670) through a communication space (600) using the spacer (600), the spacer (600) having the communication space (680), the communication space (680) connecting the tab accommodation space (670) and a space external to the spacer (600); and after the accommodating the first tab (220) and the second tab (270), curving the first tab (220) and the second tab (270) in a state in which a first guide portion (G1) faces a main outer surface of the first tab (220) and a second guide portion (G2) faces a main outer surface of the second tab (270).

## Description

### CROSS REFERENCE TO RELATED APPLICATIONS

This nonprovisional application is based on Japanese Patent Application No. 2024-212019 filed on December 5, 2024 with the Japan Patent Office, the entire contents of which are hereby incorporated by reference.

### BACKGROUND OF THE INVENTION

### Field of the Invention

The present technology relates to a power storage device and a method of manufacturing the power storage device.

### Description of the Background Art

Japanese Patent No. 4537353 discloses a power storage device having a prismatic shape, wherein a positive electrode terminal is provided on a side surface of a battery case of a secondary battery on one side and a negative electrode terminal is provided at an end portion of the battery case on the other side.

### SUMMARY OF THE INVENTION

For example, when the power storage device having the prismatic shape is configured such that the positive electrode terminal is provided on the side surface of the battery case on one side and the negative electrode terminal is provided at the end portion of the battery case on the other side, a secondary battery having a low height can be obtained. However, there is room for further improvement in order to obtain a secondary battery that can be manufactured efficiently and stably. For example, a spacer is provided between an electrode assembly and a sealing plate inside the battery case.

When connecting, to the electrode terminal of the sealing plate, a tab electrode (tab electrode group) provided in the electrode assembly, a step of allowing the tab electrode to pass through an opening provided in the spacer is required; however, a working space therefor is required and this step is required to be improved. This problem is not limited to the secondary battery, and the same applies to a power storage device that can be charged and discharged.

The present technology has been made to solve the above-described problem, and has an object to provide: a power storage device that can be efficiently and stably manufactured by further improving a process of manufacturing the power storage device; and a method of manufacturing the power storage device.

The present technology provides the following method of manufacturing a power storage device.
[1] A method of manufacturing a power storage device, the power storage device including: an electrode assembly including a first electrode and a second electrode having a polarity different from a polarity of the first electrode; and a case that accommodates the electrode assembly, wherein the case includes a case main body provided with a first opening at one end portion of the case main body, and a first sealing plate that seals the first opening, the electrode assembly includes a first tab and a second tab at an end portion of the electrode assembly on the first sealing plate side, each of the first tab and the second tab being electrically connected to the first electrode, a first spacer is disposed between the first sealing plate and the electrode assembly, each of the first tab and the second tab is disposed in a curved state in a tab accommodation space provided in the first spacer, the first spacer includes a first guide portion and a second guide portion, the first guide portion and the second guide portion are disposed to face each other, the tab accommodation space is disposed between the first guide portion and the second guide portion, a main outer surface of the first tab faces the first guide portion, a main outer surface of the second tab faces the second guide portion, the method comprising: producing the electrode assembly having the first tab and the second tab; after the producing the electrode assembly, accommodating the first tab and the second tab in the tab accommodation space through a communication space using the first spacer, the first spacer having the communication space, the communication space connecting the tab accommodation space and a space external to the first spacer; and after the accommodating the first tab and the second tab, curving the first tab and the second tab in a state in which the first guide portion faces the main outer surface of the first tab and the second guide portion faces the main outer surface of the second tab.
[2] The method of manufacturing the power storage device according to [1], the method further comprising: before the accommodating the first tab and the second tab, joining at least one of the first tab and the second tab to a current collector.
[3] The method of manufacturing the power storage device according to [1] or [2], wherein the first tab is provided with a first recess recessed to the second tab side in a curved state, the second tab is provided with a second recess recessed to the first tab side in a curved state, the first guide portion has a first projection, the second guide portion has a second projection, the first projection is disposed in the first recess, and the second projection is disposed in the second recess.
[4] The method of manufacturing the power storage device according to [3], wherein the first guide portion has a first recessed curved surface portion on the first sealing plate side of the first projection, and the second guide portion has a second recessed curved surface portion on the first sealing plate side of the second projection.
[5] The method of manufacturing the power storage device according to any one of [1] to [4], the method further comprising: after the accommodating the first tab and the second tab, inserting the electrode assembly and the first spacer into the case main body, wherein after the inserting the electrode assembly and the first spacer, in the curving the first tab and the second tab, the first tab and the second tab are curved with the first guide portion being in abutment with the first tab and the second tab being in abutment with the second guide portion.
[6] The method of manufacturing the power storage device according to any one of [1] to [5], wherein the case main body is provided with a second opening at the other end portion of the case main body, and the second opening is sealed by a second sealing plate.
[7] The method of manufacturing the power storage device according to any one of [1] to [6], wherein the first spacer is disposed at one end portion of the electrode assembly, and the electrode assembly and the first spacer are covered with an insulating sheet.
[8] The method of manufacturing the power storage device according to [7], the method further comprising: disposing the first spacer on the insulating sheet; after the disposing the first spacer on the insulating sheet, disposing the first tab and the second tab in the tab accommodation space and disposing the electrode assembly on the insulating sheet; and after the disposing the first tab and the second tab in the tab accommodation space and disposing the electrode assembly on the insulating sheet, covering the electrode assembly and the first spacer with the insulating sheet.
[9] The method of manufacturing the power storage device according to any one of [1] to [8], wherein in a region in which the communication space is defined by the first guide portion and the second guide portion, regions of the first guide portion and the second guide portion facing each other have curved shapes bulging toward each other or have shapes with chamfered corners.
[10] The method of manufacturing the power storage device according to any one of [1] to [9], wherein in the accommodating the first tab and the second tab, the first tab and the second tab are accommodated in the tab accommodation space in a state in which the first spacer is changed in shape to increase a width of the communication space, and the first spacer is then changed in shape to decrease the width of the communication space.
   The present technology provides the following power storage device.
[11] A power storage device comprising: an electrode assembly including a first electrode and a second electrode having a polarity different from a polarity of the first electrode; and a case that accommodates the electrode assembly, wherein the case includes a case main body provided with a first opening at one end portion of the case main body, and a first sealing plate that seals the first opening, the electrode assembly includes a first tab and a second tab at an end portion of the electrode assembly on the first sealing plate side, each of the first tab and the second tab being electrically connected to the first electrode, each of the first tab and the second tab is electrically connected to the first electrode in a curved state, a first spacer is disposed between the first sealing plate and the electrode assembly, the first spacer includes a main body portion, a first guide portion, and a second guide portion, the first guide portion and the second guide portion being coupled to the main body portion and being disposed to face each other, by the first guide portion and the second guide portion, a tab accommodation space is defined and a communication space connecting the tab accommodation space and an external space is defined, the communication space is defined on a side opposite to the main body portion with the first guide portion and the second guide portion being interposed between the communication space and the main body portion, the first tab is curved in a state in which the first guide portion faces a main outer surface of the first tab, and the second tab is curved in a state in which the second guide portion faces a main outer surface of the second tab.
[12] The power storage device according to [11], wherein the first tab is provided with a first recess recessed to the second tab side in a curved state, the second tab is provided with a second recess recessed to the first tab side in a curved state, the first guide portion has a first projection, the second guide portion has a second projection, the first projection is disposed in the first recess, and the second projection is disposed in the second recess.
[13] The power storage device according to [12], wherein the first guide portion has a first recessed curved surface portion on the first sealing plate side of the first projection, and the second guide portion has a second recessed curved surface portion on the first sealing plate side of the second projection.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a front view showing a configuration of a secondary battery according to a first embodiment.
Fig. 2 is a diagram showing a state in which the secondary battery shown in Fig. 1 is viewed in a direction of arrow II.
Fig. 3 is a diagram showing a state in which the secondary battery shown in Fig. 1 is viewed in a direction of arrow III.
Fig. 4 is a diagram showing a state in which the secondary battery shown in Fig. 1 is viewed in a direction of arrow IV.
Fig. 5 is a diagram showing a state in which the secondary battery shown in Fig. 1 is viewed in a direction of arrow V.
Fig. 6 is a front cross sectional view of the secondary battery shown in Fig. 1.
Fig. 7 is a cross sectional view of a negative electrode plate.
Fig. 8 is a front view showing the negative electrode plate.
Fig. 9 is a cross sectional view of a positive electrode plate.
Fig. 10 is a front view showing the positive electrode plate.
Fig. 11 is a cross sectional view of the secondary battery shown in Fig. 1 along XI-XI.
Fig. 12 is a cross sectional view of the secondary battery shown in Fig. 1 along XII-XII.
Fig. 13 is a first perspective view showing an implementation of a spacer.
Fig. 14 is a second perspective view showing the implementation of the spacer.
Fig. 15 is a cross sectional view of the spacer shown in Fig. 13 along XV-XV.
Fig. 16 is a flowchart showing a method of manufacturing the secondary battery according to the first embodiment.
Fig. 17 is a perspective view showing a state in which current collectors are joined to two electrode assemblies included in the secondary battery according to the first embodiment.
Fig. 18 is a cross sectional view of each of the electrode assemblies and the current collectors shown in Fig. 17 along XVIII-XVIII.
Fig. 19 is a perspective view showing a state of attaching the spacer to the electrode assembly.
Fig. 20 is a first schematic view showing a state before the electrode assembly and the spacer are covered with the insulating sheet.
Fig. 21 is a second schematic view showing a state before the electrode assembly and the spacer are covered with the insulating sheet.
Fig. 22 is a perspective view showing a state after the electrode assembly and the spacer are covered with the insulating sheet.
Fig. 23 is a perspective view showing a state of attaching a sealing plate to the current collectors on the positive electrode side.
Fig. 24 is a cross sectional view showing a state before the negative electrode tab on the negative electrode side is curved.
Fig. 25 is a cross sectional view showing a state after the negative electrode tab on the negative electrode side is curved.
Fig. 26 is a perspective view showing a configuration of the secondary battery.
Fig. 27 is a diagram showing a configuration of a spacer according to a second embodiment.
Fig. 28 is a first diagram showing a configuration of a spacer according to a third embodiment.
Fig. 29 is a second diagram showing the configuration of the spacer according to the third embodiment.
Fig. 30 is a first diagram showing a configuration of a spacer according to a fourth embodiment.
Fig. 31 is a second diagram showing the configuration of the spacer according to the fourth embodiment.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

In the embodiments described below, when reference is made to number, amount, and the like, the scope of the present technology is not necessarily limited to the number, amount, and the like unless otherwise stated particularly. In the embodiments described below, each component is not necessarily essential to the present technology unless otherwise stated particularly. The present technology is not limited to one that necessarily exhibits all the functions and effects stated in the present embodiment.

In the present specification, the terms "comprise", "include", and "have" are open-end terms. That is, when a certain configuration is included, a configuration other than the foregoing configuration may or may not be included.

In the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, a secondary battery is described as an example of the "power storage device", but the power storage device is not limited to the secondary battery. The term "power storage device" refers to a general power storage device that can be repeatedly charged and discharged, and represents a concept including: a secondary battery (chemical battery) such as a lithium ion secondary battery or a nickel-metal hydride battery; and a capacitor (physical battery) such as a lithium ion capacitor or an electric double layer capacitor.

In the present specification, the term "electrode" may collectively represent a positive electrode and a negative electrode.

In the specification of the present application, a first direction (X direction) may be referred to as a "width direction" of each of the secondary battery, an electrode assembly, and a case main body, a second direction (Z direction) may be referred to as a "height direction" of the secondary battery or the case main body, and a third direction (Y direction) may be referred to as a "thickness direction" of the secondary battery or the case main body. In order to facilitate understanding of the present technology, the detailed shape of each configuration in the figures may be illustrated in a simplified manner.

### (First Embodiment)

### (Overall Configuration of Secondary Battery)

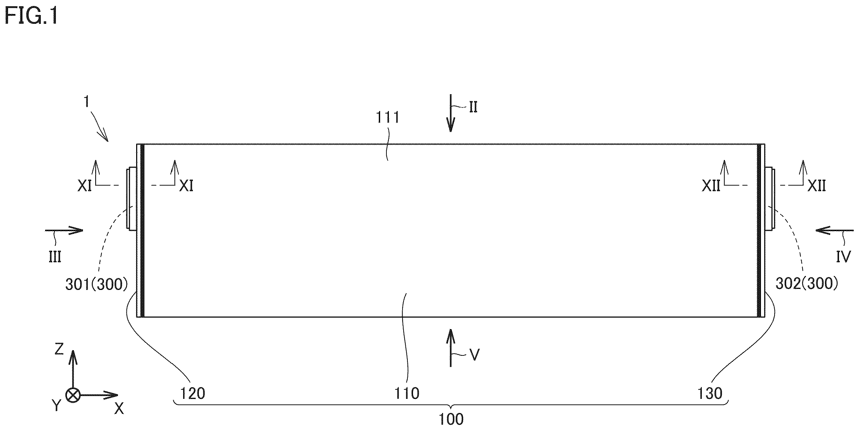

The overall configuration of a secondary battery 1 according to a first embodiment will be described with reference to Figs. 1 to 6.

In the present specification, the term "secondary battery" is not necessarily limited to a prismatic secondary battery and may include a cell having another shape, such as a cylindrical battery cell, a pouch battery cell, or a blade battery cell. Further, the "secondary battery" can be mounted on vehicles such as a hybrid electric vehicle (HEV), a plug-in hybrid electric vehicle (PHEV), and a battery electric vehicle (BEV). It should be noted that the purpose of use of the "secondary battery" is not limited to the use on a vehicle.

Secondary battery 1 includes a case 100, an electrode assembly 200, electrode terminals 300, and current collectors 400. Case 100 includes a case main body 110, a sealing plate 120 (first sealing plate), and a sealing plate 130 (second sealing plate).

When forming a battery assembly including secondary battery 1, a plurality of secondary batteries 1 are stacked in the thickness direction of each of the plurality of secondary batteries 1. Secondary batteries 1 stacked may be restrained in the stacking direction (Y direction) by a restraint member to form a battery module, or the battery assembly may be directly supported by a side surface of a case of a battery pack without using the restraint member.

Case main body 110 is constituted of a member having a tubular shape, preferably, a prismatic tubular shape. Thus, secondary battery 1 having a prismatic shape is obtained. Case main body 110 is composed of a metal. Specifically, case main body 110 is composed of aluminum, an aluminum alloy, iron, an iron alloy, or the like.

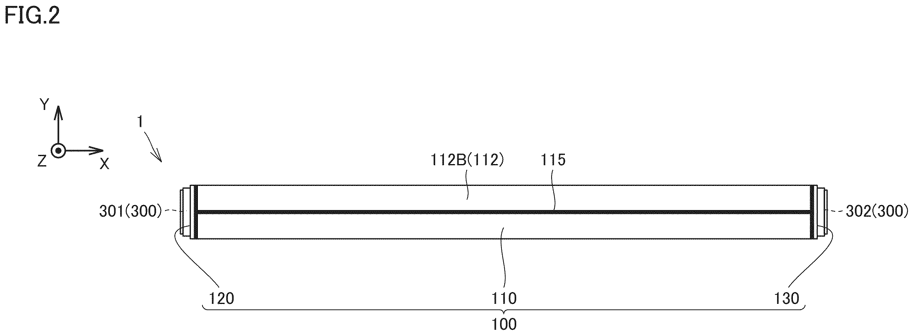

As shown in Figs. 1 and 2, sealing plate 120 and sealing plate 130 are provided at respective end portions of the case main body. Case main body 110 can be formed to have a prismatic tubular shape in, for example, the following manner: end sides of a plate-shaped member having been bent are brought into abutment with each other (joining portion 115 illustrated in Fig. 2) and are joined together (for example, energy ray application such as laser welding is favorable). Each of the corners of the "prismatic tubular shape" may have a shape with a curvature. The secondary battery in the present technology is not necessarily limited to the prismatic secondary battery.

In the present embodiment, case main body 110 is formed to be longer in the width direction (X direction) of secondary battery 1 than in each of the thickness direction (Y direction) and the height direction (Z direction) of secondary battery 1. The size (width) of case main body 110 in the X direction is preferably about 30 cm or more. In this way, secondary battery 1 can be formed to have a relatively large size (high capacity). The size (height) of case main body 110 in the Z direction is preferably about 20 cm or less, more preferably about 15 cm or less, and further preferably about 10 cm or less. Thus, (low-height) secondary battery 1 having a relatively low height can be formed, thus resulting in improved ease of mounting on a vehicle, for example.

Case main body 110 includes a pair of first side surface portions 111 and a pair of second side surface portions 112. The pair of first side surface portions 111 constitute parts of the side surfaces of case 100. The pair of second side surface portions 112 constitute the bottom surface portion and upper surface portion of case 100. The pair of first side surface portions 111 and the pair of second side surface portions 112 are provided to intersect each other. The pair of first side surface portions 111 and the pair of second side surface portions 112 are connected at their respective end portions. Each of the pair of first side surface portions 111 desirably has an area larger than that of each of the pair of second side surface portions 112.

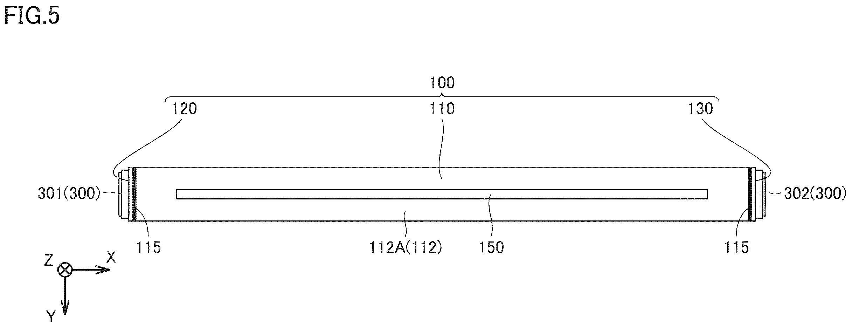

As shown in Fig. 5, a gas-discharge valve 150 is provided in one second side surface portion 112A of the pair of second side surface portions 112. Gas-discharge valve 150 extends in the width direction (X direction) of secondary battery 1. Gas-discharge valve 150 extends from the center of case main body 110 in the X direction to such an extent that gas-discharge valve 150 does not reach both ends of case main body 110 in the X direction. The shape of gas-discharge valve 150 can be changed appropriately.

The thickness of the plate-shaped member in gas-discharge valve 150 is thinner than the thickness of the plate-shaped member of case main body 110 other than gas-discharge valve 150. Thus, when the pressure in case 100 becomes equal to or more than a predetermined value, gas-discharge valve 150 is fractured prior to the other portions of case main body 110, thereby discharging the gas in case 100 to the outside.

As shown in Fig. 2, joining portion 115 is formed at the other second side surface portion 112B of the pair of second side surface portions 112. Joining portion 115 extends in the width direction (X direction) of secondary battery 1. At joining portion 115, the end sides of the plate-shaped member constituting case main body 110 are joined to each other.

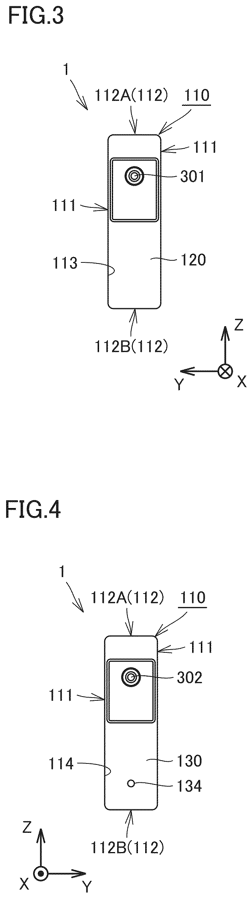

As shown in Fig. 3, an opening 113 (first opening) is provided at an end portion of case main body 110 on a first side in the first direction (X direction). Opening 113 is sealed by sealing plate 120. Joining portion 115 is formed at opening 113 so as to seal opening 113. Each of opening 113 and sealing plate 120 has a substantially rectangular shape in which the Y direction corresponds to its short-side direction and the Z direction corresponds to its long-side direction. The substantially rectangular shape includes a rectangular shape or a generally rectangular shape such as a rectangular shape having corners each with a curvature.

Sealing plate 120 (first sealing plate) is provided with a negative electrode terminal 301. The position of negative electrode terminal 301 can be appropriately changed.

As shown in Fig. 4, an opening 114 (second opening) is provided at an end portion of case main body 110 on a second side opposite to the first side in the first direction (X direction). That is, opening 114 is located at an end portion opposite to opening 113, and openings 113 and 114 face each other. Opening 114 is sealed by sealing plate 130. Joining portion 115 is formed at opening 114 so as to seal opening 114. Each of opening 114 and sealing plate 130 has a substantially rectangular shape in which the Y direction corresponds to its short-side direction and the Z direction corresponds to its long-side direction.

Sealing plate 130 (second sealing plate) is provided with a positive electrode terminal 302 and an injection hole 134. Injection hole 134 may have a size with which an electrolyte solution can be injected into case 100, and is desirably smaller than a hole used for insertion of positive electrode terminal 302 and provided in sealing plate 130. Injection hole 134 is desirably disposed to be deviated from the center of sealing plate 130 in the Z direction. The positions of positive electrode terminal 302 and injection hole 134 can be appropriately changed.

Each of sealing plate 120 and sealing plate 130 is composed of a metal. Specifically, each of sealing plate 120 and sealing plate 130 is composed of aluminum, an aluminum alloy, iron, an iron alloy, or the like.

Negative electrode terminal 301 (first electrode terminal) is electrically connected to a negative electrode of electrode assembly 200. Negative electrode terminal 301 is attached to sealing plate 120, i.e., case 100.

Positive electrode terminal 302 (second electrode terminal) is electrically connected to a positive electrode of electrode assembly 200. Positive electrode terminal 302 is attached to sealing plate 130, i.e., case 100.

Negative electrode terminal 301 is composed of a conductive material (more specifically, a metal), and can be composed of copper, a copper alloy, or the like, for example. A portion or layer composed of aluminum or an aluminum alloy may be provided at a portion of an outer surface of negative electrode terminal 301.

Positive electrode terminal 302 is composed of a conductive material (more specifically, a metal), and can be composed of aluminum, an aluminum alloy, or the like, for example.

Injection hole 134 is sealed by a sealing member (not shown). As the sealing member, for example, a blind rivet or another metal member can be used.

Electrode assembly 200 is an electrode assembly having a flat shape and having a below-described positive electrode plate and a below-described negative electrode plate stacked on each other. Specifically, electrode assembly 200 is a stacked type electrode assembly in which a plurality of positive electrode plates and a plurality of negative electrode plates are alternately stacked with below-described separators 800 being interposed therebetween. However, in the present specification, the "electrode assembly" is not limited to the stacked type electrode assembly, and may be a wound type electrode assembly in which a strip-shaped positive electrode plate and a strip-shaped negative electrode plate are wound together with a strip-shaped separator being interposed therebetween. The separator can be constituted of, for example, a microporous membrane composed of polyolefin. When the electrode assembly is the stacked type electrode assembly including the plurality of positive electrode plates and the plurality of negative electrode plates, positive electrode tabs provided on the positive electrode plates may be stacked to form a positive electrode tab group, and negative electrode tabs provided on the negative electrode plates may be stacked to form a negative electrode tab group.

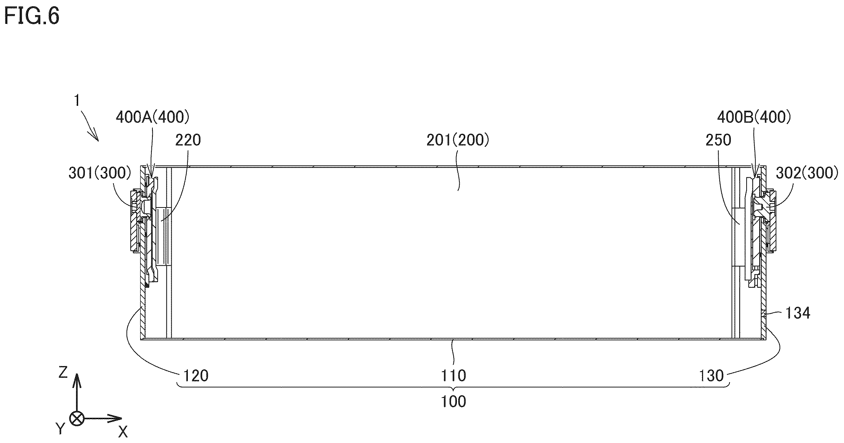

As shown in Fig. 6, case 100 accommodates electrode assembly 200. Fig. 6 illustrates a first electrode assembly 201 described below. First electrode assembly 201 is accommodated in case 100 such that the long-side direction thereof is parallel to the X direction.

Specifically, one or a plurality of the stacked type electrode assemblies and the electrolyte solution (electrolyte) (not shown) are accommodated inside a below-described insulating sheet 700 disposed in case 100. As the electrolyte solution (non-aqueous electrolyte solution), it is possible to use, for example, a solution obtained by dissolving LiPF₆ at a concentration of 1.2 mol/L in a non-aqueous solvent obtained by mixing ethylene carbonate (EC), ethyl methyl carbonate (EMC), and dimethyl carbonate (DMC) at a volume ratio (25°C) of 30:30:40. Instead of the electrolyte solution, a solid electrolyte may be used.

Electrode assembly 200 includes first electrode assembly 201. First electrode assembly 201 includes a main body portion having a substantially rectangular shape, a negative electrode tab group 220, and a positive electrode tab group 250.

The main body portion is constituted of a below-described negative electrode plate 210 and a below-described positive electrode plate 240. Negative electrode tab group 220 is located at an end portion of first electrode assembly 201 on the first side with respect to the main body portion thereof in the first direction (X direction). The first side in the present embodiment is the sealing plate 120 side. Positive electrode tab group 250 is located at an end portion of first electrode assembly 201 on the second side with respect to the main body portion thereof in the first direction (X direction). The second side in the present embodiment is the sealing plate 130 side.

Each of negative electrode tab group 220 and positive electrode tab group 250 is formed to protrude from a central portion of electrode assembly 200 toward sealing plate 120 or sealing plate 130.

Current collectors 400 include a negative electrode current collector 400A and a positive electrode current collector 400B. Each of negative electrode current collector 400A and positive electrode current collector 400B is constituted of a plate-shaped member. Electrode assembly 200 is electrically connected to negative electrode terminal 301 and positive electrode terminal 302 through current collectors 400.

Negative electrode current collector 400A is disposed on sealing plate 120 with an insulating member composed of a resin being interposed therebetween. Negative electrode current collector 400A is electrically connected to negative electrode tab group 220 and negative electrode terminal 301. Negative electrode current collector 400A is composed of a conductive material (more specifically, a metal), and can be composed of copper, a copper alloy, or the like, for example. Details of negative electrode current collector 400A will be described later.

Positive electrode current collector 400B is disposed on sealing plate 130 with an insulating member composed of a resin being interposed therebetween. Positive electrode current collector 400B is electrically connected to positive electrode tab group 250 and positive electrode terminal 302. Positive electrode current collector 400B is composed of a conductive material (more specifically, a metal), and can be composed of aluminum, an aluminum alloy, or the like, for example. Positive electrode tab group 250 may be electrically connected to sealing plate 130 directly or via positive electrode current collector 400B. In this case, sealing plate 130 may serve as positive electrode terminal 302. Details of positive electrode current collector 400B will be described later.

### (Configuration of Electrode Assembly 200)

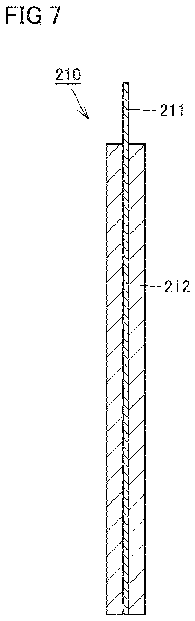

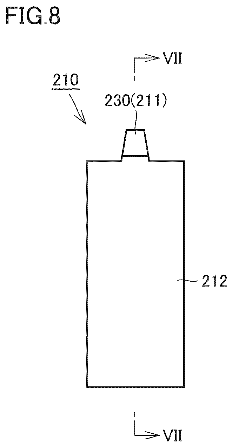

As shown in Figs. 7 and 8, negative electrode plate 210 serving as a first electrode has a polarity different from a polarity of positive electrode plate 240 serving as a second electrode. A negative electrode tab 230 (first electrode tab) constituted of a negative electrode core body 211 is provided at one end portion, in the width direction, of negative electrode plate 210. When negative electrode plates 210 are stacked, a plurality of negative electrode tabs 230 are stacked to form negative electrode tab group 220. Negative electrode tab group 220 is electrically connected to the first electrode. The length of each of negative electrode tabs 230 in the plurality of negative electrode plates 210 in the protruding direction is appropriately adjusted in consideration of the state in which negative electrode tab group 220 is connected to negative electrode current collector 400A. The shape of negative electrode tab 230 is not limited to the one illustrated in Fig. 7.

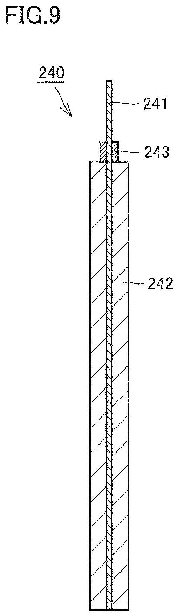

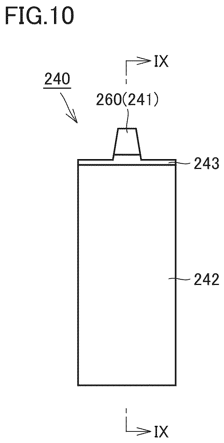

As shown in Figs. 9 and 10, a positive electrode tab 260 (second electrode tab) constituted of a positive electrode core body 241 is provided at one end portion, in the width direction, of positive electrode plate 240 formed. When positive electrode plates 240 are stacked, a plurality of positive electrode tabs 260 are stacked to form positive electrode tab group 250. Positive electrode tab group 250 is electrically connected to the second electrode. The length of each of positive electrode tabs 260 in the plurality of positive electrode plates 240 in the protruding direction is appropriately adjusted in consideration of the state in which positive electrode tab group 250 is connected to positive electrode current collector 400B. The shape of positive electrode tab 260 is not limited to the one illustrated in Fig. 10.

A positive electrode protective layer 243 is provided at the root of positive electrode tab 260. Positive electrode protective layer 243 may not necessarily be provided at the root of positive electrode tab 260.

In a typical example, the thickness of (one) negative electrode tab 230 is smaller than the thickness of (one) positive electrode tab 260. In this case, the thickness of negative electrode tab group 220 is smaller than the thickness of positive electrode tab group 250.

### (Connection Structure between Electrode Assembly 200 and Current Collector 400)

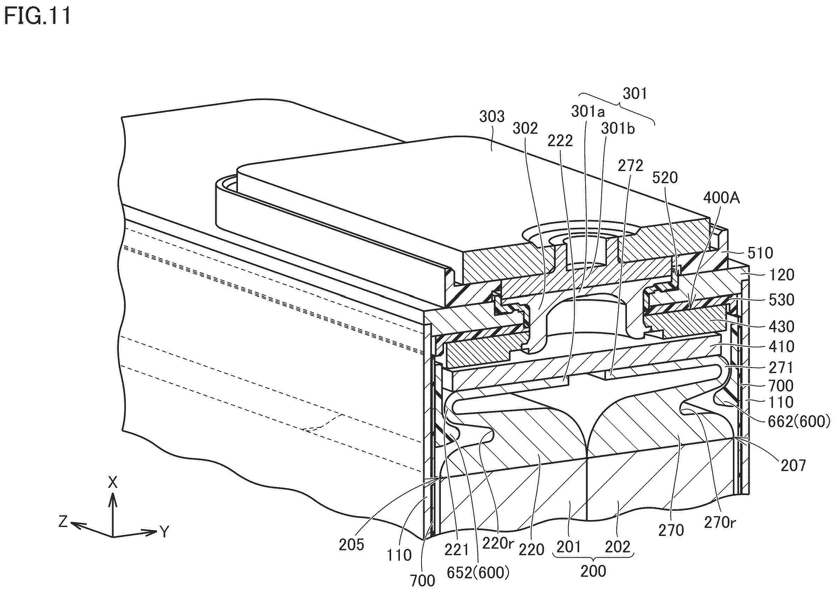

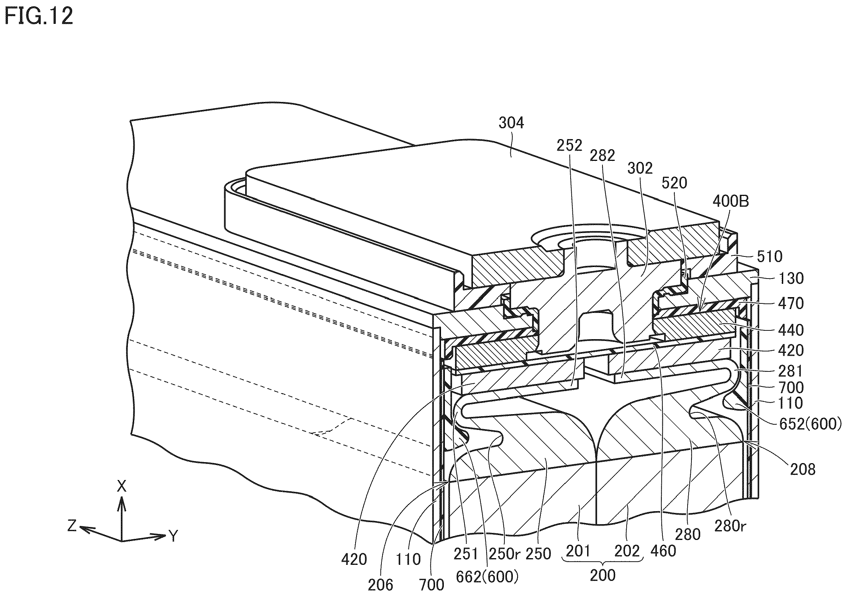

A connection structure between electrode assembly 200 and current collector 400 will be described with reference to Figs. 11 and 12.

### <Negative Electrode Side>

Fig. 11 shows a connection structure on the negative electrode side. Electrode assembly 200 includes first electrode assembly 201 and a second electrode assembly 202. Each of first electrode assembly 201 and second electrode assembly 202 includes a positive electrode (second electrode) and a negative electrode (first electrode). Electrode assembly 200 may be constituted of three or more electrode assemblies.

Electrode assembly 200 is formed by overlapping first electrode assembly 201 and second electrode assembly 202 with each other. First electrode assembly 201 and second electrode assembly 202 are arranged side by side in the thickness direction (Y direction) of each of first electrode assembly 201 and second electrode assembly 202.

First electrode assembly 201 includes negative electrode tab group 220 (first tab). Negative electrode tab group 220 is electrically connected to a current collector 410 (negative electrode current collector) at its first end portion 205 in the X direction. Second electrode assembly 202 includes a negative electrode tab group 270 (second tab). Negative electrode tab group 270 is electrically connected to current collector 410 (negative electrode current collector) at its third end portion 207 in the X direction.

Negative electrode tab group 220 has a curved portion 221 and a tip portion 222. Curved portion 221 is a portion at which negative electrode tab group 220 is curved on the side, on which the first electrode is connected, with respect to tip portion 222. Tip portion 222 is a portion located at an end portion of negative electrode tab group 220 on the side opposite to the side on which the first electrode is connected.

Negative electrode tab group 220 is provided with a first recess 220r recessed to the negative electrode tab group 270 side in a curved state. Negative electrode tab group 270 is provided with a second recess 270r recessed to the negative electrode tab group 220 side in a curved state.

A below-described first projection 652 provided in a first guide portion G1 of spacer 600 is disposed in first recess 220r. Similarly, a below-described second projection 662 provided in a second guide portion G2 of spacer 600 is disposed in second recess 270r.

Negative electrode tab group 270 has a curved portion 271 and a tip portion 272. Curved portion 271 is a portion at which negative electrode tab group 270 is curved on the side, on which the first electrode is connected, with respect to tip portion 272. Tip portion 272 is a portion located at an end portion of negative electrode tab group 270 on the side opposite to the side on which the first electrode is connected.

Negative electrode tab group 220 and negative electrode tab group 270 are curved in opposite directions such that tip portions 222, 272 are close to each other. Tip portions 222, 272 are separated from each other in the present embodiment; however, it is not limited to this configuration, and tip portions 222, 272 may be in contact with each other.

Here, negative electrode tab group 220 is referred to as a first tab, and negative electrode tab group 270 is referred to as a second tab. The first tab is meant to include a negative electrode tab electrically in contact with at least a below-described current collector 410 in one negative electrode tab group 220, and the second tab is meant to include a negative electrode tab electrically in contact with at least current collector 410 in the other negative electrode tab group 270. Therefore, the first tab and the second tab may each be a negative electrode tab located closest to the current collector 410 side, may each be a portion of the core body (metal foil) of the negative electrode plate, or may be separate components.

Negative electrode current collector 400A electrically connects negative electrode terminal 301 to negative electrode tab group 220 and negative electrode tab group 270. Negative electrode current collector 400A in the present embodiment is connected to negative electrode terminal 301 between electrode assembly 200 and sealing plate 120.

Negative electrode current collector 400A includes current collector 410 and a current collector 430.

Current collector 410 is a plate-shaped member. Current collector 410 has a long-side direction in the Z direction and a short-side direction in the Y direction. Current collector 410 is constituted of a single component in one piece. Current collector 430 is a plate-shaped member. Current collector 430 has a long-side direction in the Z direction and a short-side direction in the Y direction. Current collector 410 and current collector 430 are arranged side by side in parallel in the X direction. In this way, current collector 410 and current collector 430 are constituted of separate components.

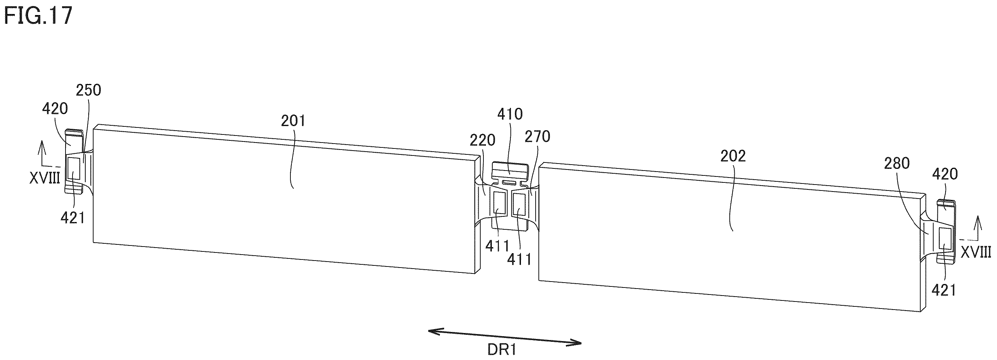

Negative electrode tab groups 220, 270 are joined to current collector 410 at joining locations 411 (see Fig. 17) described later. Each of joining locations 411 can be formed by ultrasonic welding, resistance welding, laser welding, swaging, or the like, for example. In the present embodiment, each of negative electrode tab groups 220, 270 and current collector 410 are joined by, for example, ultrasonic joining.

Current collector 430 is joined to current collector 410 at a joining location (not shown) located at its end portion in the Z direction. Current collector 430 is connected to negative electrode terminal 301. The connection between current collector 430 and negative electrode terminal 301 can be formed by swaging and/or welding, for example.

Negative electrode terminal 301 is exposed to the outside of sealing plate 120. Negative electrode terminal 301 is connected to a plate-shaped member 303. Negative electrode terminal 301 preferably includes a region 301a composed of copper or a copper alloy and a region 301b composed of aluminum or an aluminum alloy, and region 301a composed of copper or a copper alloy is preferably connected to current collector 430.

Plate-shaped member 303 is located on the outer side with respect to sealing plate 120. Plate-shaped member 303 is disposed along sealing plate 120. Plate-shaped member 303 has electric conductivity. Plate-shaped member 303 is disposed to secure an area of connection with a bus bar or the like that electrically connects secondary battery 1 and another secondary battery adjacent thereto. The connection between negative electrode terminal 301 and plate-shaped member 303 can be formed by, for example, laser welding or the like.

An insulating member 510 is disposed between plate-shaped member 303 and sealing plate 120. An insulating member 520 is disposed between negative electrode terminal 301 and sealing plate 120. An insulating member 530 is disposed between current collector 430 and sealing plate 120.

It should be noted that negative electrode terminal 301 may be electrically connected to sealing plate 120. Sealing plate 120 may function as negative electrode terminal 301.

Spacer 600 (first spacer) is disposed between sealing plate 120 (first sealing plate) and the main body portion (negative electrode tab groups 220, 270 are not included) of electrode assembly 200. Spacer 600 is composed of a resin member having an insulating property. Spacer 600 suppresses movement of electrode assembly 200 in case 100 in the X direction to suppress damages of negative electrode tab group 220, negative electrode tab group 270, electrode assembly 200, and the like. Each of negative electrode tab group 220 and negative electrode tab group 270 is disposed inside a tab accommodation space 670 provided in spacer 600, thereby protecting each of negative electrode tab group 220 and negative electrode tab group 270 by spacer 600 to suppress each of negative electrode tab group 220 and negative electrode tab group 270 from being deformed into an unintended shape. Further, an unintended short circuit of each of negative electrode tab group 220 and negative electrode tab group 270 (such as contact with a conductive member having a different polarity) can be suppressed.

Insulating sheet 700 (electrode assembly holder) composed of a resin is disposed between electrode assembly 200 and case main body 110. Insulating sheet 700 may be composed of, for example, a resin. More specifically, the material of insulating sheet 700 is, for example, polypropylene (PP), polyethylene terephthalate (PET), polyphenylene sulfide (PPS), polyimide (PI), or polyolefin (PO).

### <Positive Electrode Side>

Fig. 12 shows a connection structure on the positive electrode side. The connection structure between electrode assembly 200 and current collector 400 on the positive electrode side of secondary battery 1 according to the present embodiment is different from that of the configuration on the negative electrode side in the following point: a portion corresponding to current collector 410 on the negative electrode side is constituted of two components.

First electrode assembly 201 includes positive electrode tab group 250 (second tab). Positive electrode tab group 250 is electrically connected to a current collector 420 (positive electrode current collector) at its second end portion 206 in the X direction. Second electrode assembly 202 includes a positive electrode tab group 280 (first tab). Positive electrode tab group 280 is electrically connected to current collector 420 (positive electrode current collector) at its fourth end portion 208 in the X direction.

Positive electrode tab group 250 has a curved portion 251 and a tip portion 252. Curved portion 251 is a portion at which positive electrode tab group 250 is curved on the side, on which the second electrode is connected, with respect to tip portion 252. Tip portion 252 is a portion located at an end portion of positive electrode tab group 250 on the side opposite to the side on which the second electrode is connected.

Positive electrode tab group 250 is provided with a first recess 250r recessed to the positive electrode tab group 280 side in a curved state. Positive electrode tab group 280 is provided with a second recess 280r recessed to the positive electrode tab group 250 side in a curved state.

A below-described first projection 652 provided in a first guide portion G1 of spacer 600 is disposed in first recess 250r. Similarly, a below-described second projection 662 provided in a second guide portion G2 of spacer 600 is disposed in second recess 280r.

Positive electrode tab group 280 has a curved portion 281 and a tip portion 282. Curved portion 281 is a portion at which positive electrode tab group 280 is curved on the side, on which the second electrode is connected, with respect to tip portion 282. Tip portion 282 is a portion located at an end portion of positive electrode tab group 280 on the side opposite to the side on which the second electrode is connected.

Positive electrode tab group 250 and positive electrode tab group 280 are curved in opposite directions such that tip portions 252, 282 are close to each other. Tip portions 252, 272 are separated from each other in the present embodiment; however, it is not limited to this configuration, and tip portions 252, 282 may be in contact with each other.

Here, positive electrode tab group 250 is referred to as a second tab, and positive electrode tab group 280 is referred to as a first tab. The second tab is meant to include a positive electrode tab electrically in contact with at least a below-described current collector 420 in positive electrode tab group 250, and the first tab is meant to include a positive electrode tab electrically in contact with at least current collector 420 in the other positive electrode tab group 280. Therefore, the first tab and the second tab may each be a positive electrode tab located closest to the current collector 420 side, may each be a portion of the core body (metal foil) of the positive electrode plate, or may be separate components.

Positive electrode current collector 400B electrically connects positive electrode terminal 302 to positive electrode tab group 250 and positive electrode tab group 280. Positive electrode current collector 400B in the present embodiment is connected to positive electrode terminal 302 between electrode assembly 200 and sealing plate 130.

Positive electrode current collector 400B includes current collector 420 (first current collection member) and a current collector 440 (second current collection member). A plate 460 is interposed as an insulating member between current collector 420 (first current collection member) and current collector 440 (second current collection member), but current collector 420 and current collector 440 are electrically joined to each other at a position different from the cross section shown in the figure.

Current collector 420 is a plate-shaped member. Current collector 420 has a long-side direction in the Z direction and a short-side direction in the Y direction. Current collector 420 is constituted of one current collector and the other current collector. That is, current collector 420 is constituted of two components.

Positive electrode tab group 250 and positive electrode tab group 280 are joined, at below-described joining locations 421 (see Fig. 17), to current collector 420 constituted of the two components. Each of joining locations 421 can be formed by ultrasonic welding, resistance welding, laser welding, swaging, or the like, for example. In the present embodiment, positive electrode tab group 250 and positive electrode tab group 280 are joined to current collector 420 by ultrasonic joining, for example.

Current collector 440 is joined to current collector 420 at a joining location (not shown) located at its end portion in the Z direction. Current collector 440 is connected to positive electrode terminal 302. The connection between current collector 440 and positive electrode terminal 302 can be formed by swaging and/or welding, for example.

Positive electrode terminal 302 is provided to be exposed to the outside of sealing plate 130 and reach current collector 440 of positive electrode current collector 400B provided on the inner surface side of sealing plate 130. Positive electrode terminal 302 is connected to a plate-shaped member 304.

Plate-shaped member 304 is located on the outer side with respect to sealing plate 130. Plate-shaped member 304 is disposed along sealing plate 130. Plate-shaped member 304 has electric conductivity. Plate-shaped member 304 is disposed to secure an area of connection with a bus bar or the like that electrically connects secondary battery 1 and another secondary battery adjacent thereto. The connection between positive electrode terminal 302 and plate-shaped member 304 may be formed by, for example, laser welding or the like.

An insulating member 510 is disposed between plate-shaped member 304 and sealing plate 130. An insulating member 520 is disposed between positive electrode terminal 302 and sealing plate 130. An insulating member 470 is disposed between current collector 440 and sealing plate 130.

It should be noted that positive electrode terminal 302 may be electrically connected to sealing plate 130. Sealing plate 130 may function as positive electrode terminal 302.

Spacer 600 (second spacer) is disposed between sealing plate 130 (second sealing plate) and the main body portion (positive electrode tab groups 250, 280 are not included) of electrode assembly 200. Spacer 600 is composed of a resin member having an insulating property. Spacer 600 suppresses movement of electrode assembly 200 in case 100 in the X direction to suppress damages of positive electrode tab groups 250, 280, electrode assembly 200, and the like. Each of positive electrode tab group 250 and positive electrode tab group 280 passes through tab accommodation space 670 provided in spacer 600, thereby protecting each of positive electrode tab group 250 and positive electrode tab group 280 by spacer 600 to suppress each of positive electrode tab group 250 and positive electrode tab group 280 from being deformed into an unintended shape. Further, an unintended short circuit of each of positive electrode tab group 250 and positive electrode tab group 280 (such as contact with a conductive member having a different polarity) can be suppressed.

Spacer 600 disposed on each of the negative electrode side and the positive electrode side is composed of a resin, for example. Examples of the material of spacer 600 includes polypropylene (PP), polyphenylene sulfide (PPS), polybutylene terephthalate (PBT), ethylene-propylene-diene rubber (EPDM), and the like.

Insulating sheet 700 (electrode assembly holder) composed of a resin as described above is disposed between electrode assembly 200 and case main body 110.

### (Spacer 600)

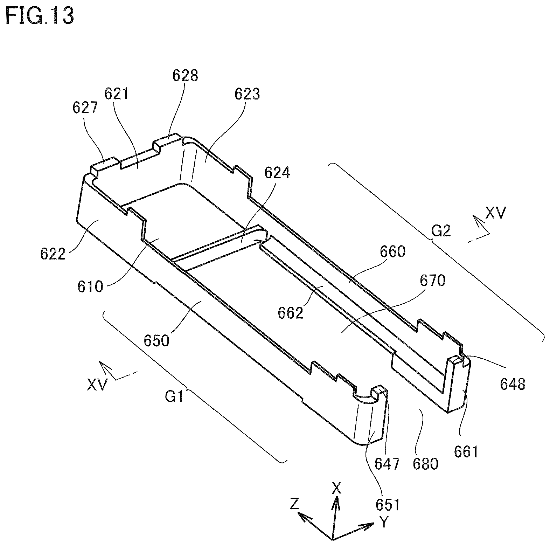

An implementation of spacer 600 will be described with reference to Figs. 13 to 15. In the present embodiment, the implementation of spacer 600 disposed on each of the negative electrode tab group 220 side and the negative electrode tab group 270 side is the same as the implementation of spacer 600 disposed on each of the positive electrode tab group 250 side and the positive electrode tab group 280 side.

Spacer 600 has a rectangular outer shape along the inner peripheral surface of case main body 110, and is formed to be longer in the height direction (Z direction) than in the thickness direction (Y direction) of secondary battery 1 as with case main body 110.

Spacer 600 includes a first base portion 610. First base portion 610 is surrounded by a first peripheral wall 621, a second peripheral wall 622, a third peripheral wall 623, and a fourth peripheral wall 624. Fourth peripheral wall 624 is located on the inner side, and is therefore provided to be lower than the other peripheral walls. Protuberances 627, 628 are provided, in an end side of first peripheral wall 621 opposite to first base portion 610, at positions separated from each other by a predetermined distance.

First base portion 610 is provided with a first guide portion G1 and a second guide portion G2 that are disposed to face each other and that extend in one direction (Z direction). One end of first guide portion G1 is fixed to first base portion 610, and the other end of first guide portion G1 is in an open state. One end of second guide portion G2 is fixed to first base portion 610, and the other end of second guide portion G2 is in an open state.

First guide portion G1 includes: a first coupling peripheral wall 650 extending continuously from second peripheral wall 622; and a second coupling peripheral wall 651 extending toward second guide portion G2 on the other end side of first coupling peripheral wall 650. A protuberance 647 similar to each of protuberances 627, 628 provided in first peripheral wall 621 is provided in second coupling peripheral wall 651. First projection 652 extending from second peripheral wall 622 toward second coupling peripheral wall 651 (in the Z direction) is provided in a surface of first coupling peripheral wall 650 facing second guide portion G2.

Second guide portion G2 includes: a third coupling peripheral wall 660 extending continuously from third peripheral wall 623; and a fourth coupling peripheral wall 661 extending toward first guide portion G1 on the other end side of third coupling peripheral wall 660. A protuberance 648 similar to each of protuberances 627, 628 provided in first peripheral wall 621 is provided in fourth coupling peripheral wall 661. Second projection 662 extending from third peripheral wall 623 toward fourth coupling peripheral wall 661 (in the Z direction) is provided in a surface of third coupling peripheral wall 660 facing first guide portion G1.

Second coupling peripheral wall 651 and fourth coupling peripheral wall 661 are not coupled to each other, and a communication space 680 is formed therebetween. Communication space 680 is a space that connects the below-described tab accommodation space 670 and a space external to spacer 600. A preferable size of communication space 680 provided between second coupling peripheral wall 651 and fourth coupling peripheral wall 661 will be described later.

In spacer 600 having the above configuration, tab accommodation space 670 surrounded by fourth peripheral wall 624, first coupling peripheral wall 650, second coupling peripheral wall 651, and third coupling peripheral wall 660 is defined.

In a below-described process of manufacturing the secondary battery, there are employed: an accommodation step of accommodating the first tab and the second tab in tab accommodation space 670 through communication space 680; and a curving step of, after the accommodation step, curving the first tab by first guide portion G1 facing the main outer surface of the first tab and curving the second tab by second guide portion G2 facing the main outer surface of the second tab.

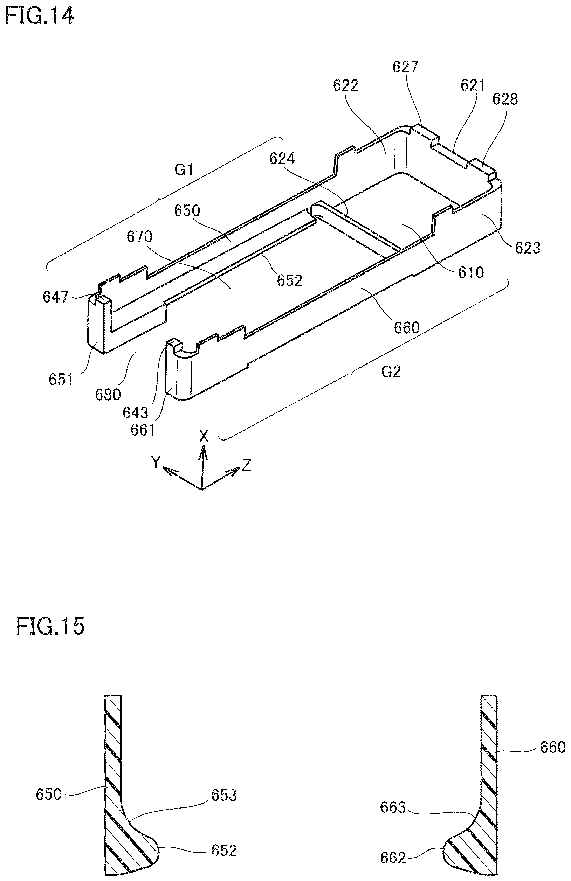

As shown in Fig. 15, the outer surface of first projection 652 provided on the inner side of first coupling peripheral wall 650 may be provided to have a curved surface shape because first projection 652 is in abutment with the first tab during the process of manufacturing the secondary battery. Further, a first recessed curved surface portion 653 may be provided on the sealing plate 120 (first sealing plate) side (upper side in the figure) of first projection 652.

Since the outer surface of first projection 652 is provided to have the curved surface shape in this way, the first tab can be more stably deformed into a predetermined shape, thereby suppressing occurrence of damage of the first tab when brought into abutment with the first tab. Further, by providing first recessed curved surface portion 653, the first tab can be more stably deformed into the predetermined shape, thereby further suppressing the occurrence of the damage of the first tab when brought into abutment with the first tab.

Similarly, as with first coupling peripheral wall 650 described above, the outer surface of second projection 662 provided on the inner side of third coupling peripheral wall 660 may also be provided to have a curved surface shape because second projection 662 is in abutment with the second tab during the process of manufacturing the secondary battery. Further, a second recessed curved surface portion 663 may be provided on the sealing plate 120 (first sealing plate) side (upper side in the figure) of second projection 662.

Since the outer surface of second projection 662 is provided to have a curved surface shape in this way, the second tab can be more stably deformed into a predetermined shape, thereby suppressing occurrence of damage of the second tab when brought into abutment with the second tab. Further, by providing second recessed curved surface portion 663, the second tab can be more stably deformed into the predetermined shape, thereby further suppressing the occurrence of the damage of the second tab when brought into abutment with the second tab.

### (Process of Manufacturing Secondary Battery 1 (Electrode Assembly Production Step))

Hereinafter, a method of manufacturing the secondary battery according to the present embodiment will be described.

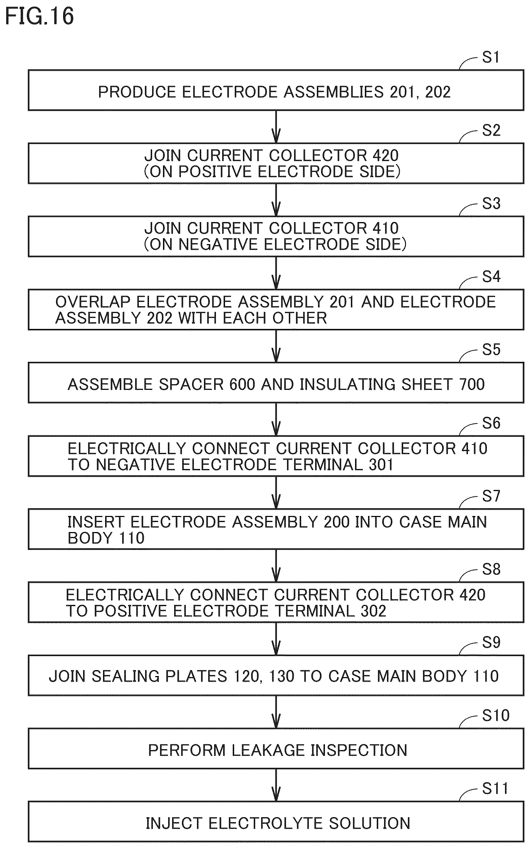

As shown in Fig. 16, in the method of manufacturing the secondary battery according to the present embodiment, first, first electrode assembly 201 and second electrode assembly 202 are produced (step S1). Parts of the tips of negative electrode tab group 220, positive electrode tab group 250, negative electrode tab group 270, and positive electrode tab group 280 are preferably cut such that they have the same tip length when bundled.

As shown in Figs. 16 to 18, after producing first electrode assembly 201 and second electrode assembly 202, each of positive electrode tab groups 250, 280 is joined to current collector 420 (step S2). Each of positive electrode tab groups 250, 280 is joined to current collector 420 at joining location 421.

Next, first electrode assembly 201, current collector 410, and second electrode assembly 202 are disposed side by side in this order in a DR1 direction. Negative electrode tab group 220 is disposed on one side with respect to current collector 410 in the DR1 direction. Negative electrode tab group 220 and negative electrode tab group 270 are joined to current collector 410 with negative electrode tab group 270 being disposed on the other side with respect to current collector 410 in the DR1 direction (step S3). Negative electrode tab group 220 and negative electrode tab group 270 are joined to current collector 410 at joining locations 411.

In the height direction of each of first electrode assembly 201 and second electrode assembly 202, each of current collector 410 and current collector 420 is disposed on one side with respect to the center of each of first electrode assembly 201 and second electrode assembly 202. Thus, each of the current collectors can be formed to be short, thereby reducing the size of the current collector. Each of current collector 410 and current collector 420 is not limited to this configuration. In the height direction of each of first electrode assembly 201 and second electrode assembly 202, each of current collector 410 and current collector 420 may be disposed at the center of a corresponding one of first electrode assembly 201 and second electrode assembly 202.

The order of the steps of joining current collector 410 and current collector 420 to first electrode assembly 201 and second electrode assembly 202 is not limited to the one described above, and the order may be changed. The step of joining current collector 420 to each of first electrode assembly 201 and second electrode assembly 202 is preferably performed before the below-described step of overlapping first electrode assembly 201 and second electrode assembly 202 with each other, and is preferably performed before the step of joining current collector 410 to first electrode assembly 201 and second electrode assembly 202.

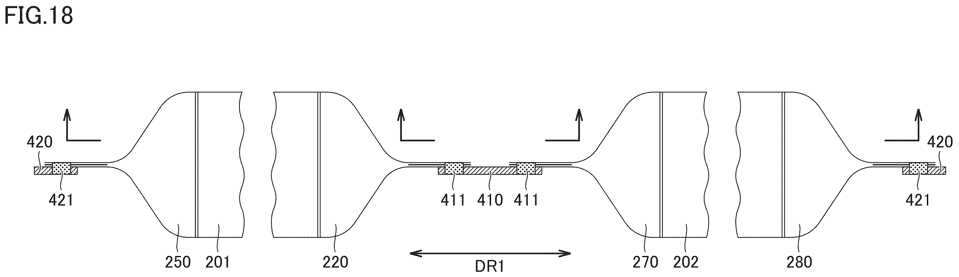

Next, after joining negative electrode tab group 220 and negative electrode tab group 270 to current collector 410, negative electrode tab group 220 and negative electrode tab group 270 are bent in the thickness direction (direction orthogonal to the DR1 direction in Figs. 17 and 18) of each of first electrode assembly 201 and second electrode assembly 202, thereby overlapping first electrode assembly 201 and second electrode assembly 202 with each other (step S4). That is, first electrode assembly 201 and second electrode assembly 202 are collected together.

Regarding the expression "overlapping the first electrode assembly and the second electrode assembly with each other", the first electrode assembly and the second electrode assembly may be overlapped with each other directly, or another member may be disposed between the first electrode assembly and the second electrode assembly. The first electrode assembly and the second electrode assembly may or may not be fixed by a tape or the like. Further, the first electrode assembly, the current collector, and the second electrode assembly may not be disposed on a straight line in the DR1 direction, and the first electrode assembly or the second electrode assembly may be inclined with respect to the current collector in the DR1 direction.

Negative electrode tab group 220 and negative electrode tab group 270 are folded such that the tip portions thereof face each other. Positive electrode tab group 250 and positive electrode tab group 280 are also folded such that the tip portions thereof face each other.

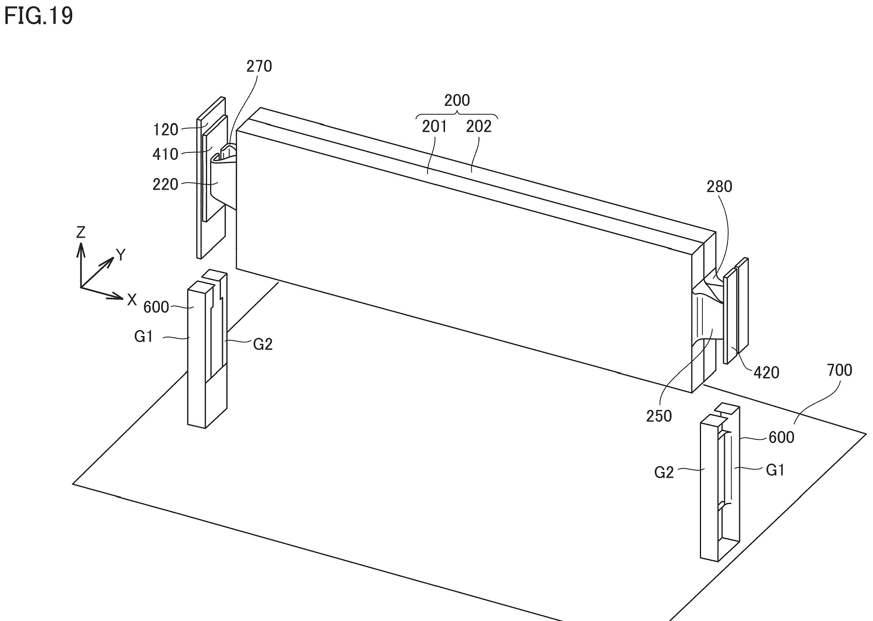

As shown in Figs. 16 and 19, each spacer 600 and insulating sheet 700 are assembled to electrode assembly 200 (step S5).

As shown in Fig. 19, electrode assembly 200 is disposed on insulating sheet 700, and spacers 600 are disposed at the both end portions of electrode assembly 200. First side surface portion 111 is disposed to be located on the upper side, second side surface portion 112 is disposed to be located on the lower side, and second side surface portion 112 is disposed to be located on the insulating sheet 700 side. Each of spacers 600 is disposed such that the long side thereof extends in the vertical direction and the short side thereof in which communication space 680 is provided is located on the upper side.

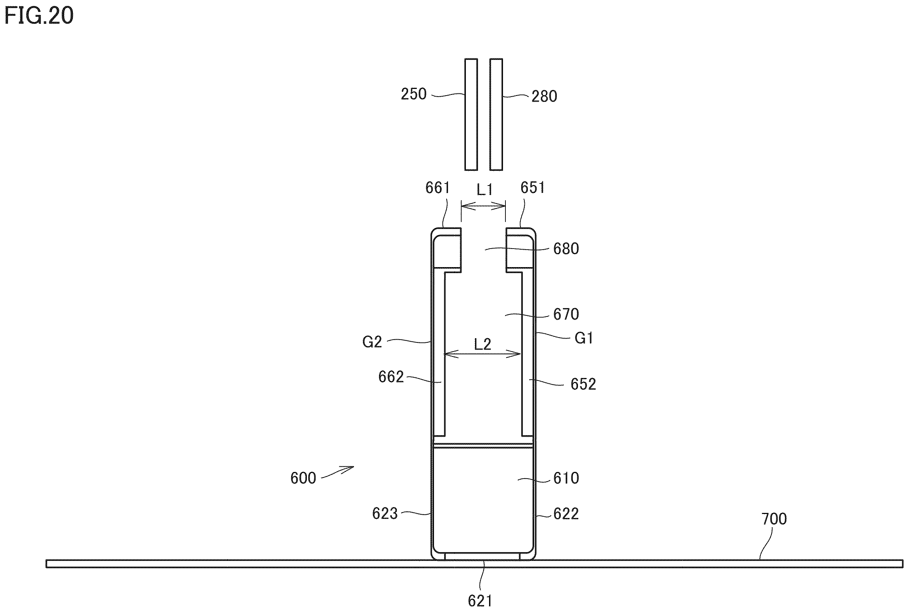

As shown in Fig. 20, spacer 600 is placed on insulating sheet 700. Since positive electrode tab group 250 (second tab) and positive electrode tab group 280 (first tab) are allowed to pass through tab accommodation space 670 via communication space 680 in spacer 600, a preferable size L1 between second coupling peripheral wall 651 and fourth coupling peripheral wall 661 is preferably about 10 mm. Further, in the accommodation space for accommodating positive electrode tab group 250 and positive electrode tab group 280, a size L2 between first projection 652 and second projection 662 may be about 15 mm.

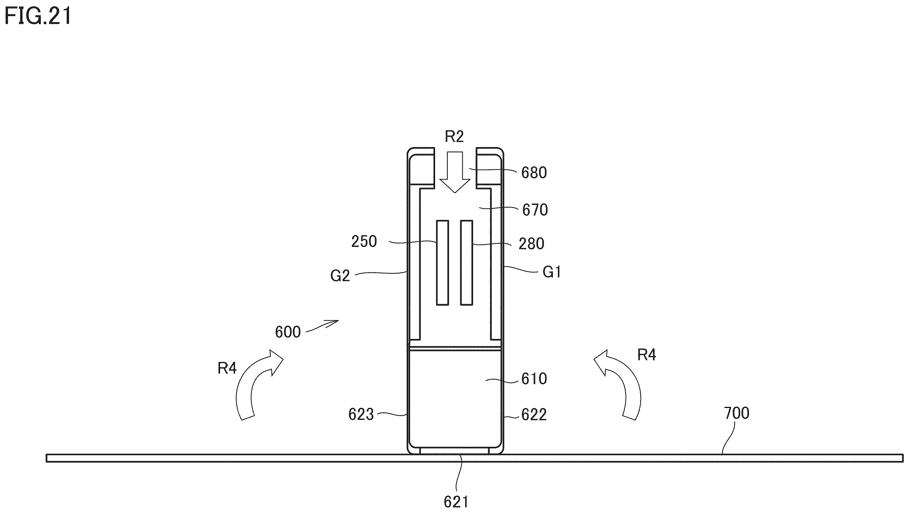

Next, referring to Fig. 21, positive electrode tab group 250 and positive electrode tab group 280 are accommodated in tab accommodation space 670 (electrode assembly 200 is moved in a direction of arrow R2 in the figure/accommodation step).

On this occasion, first projection 652 of first coupling peripheral wall 650 is located to face the main outer surface of positive electrode tab group 250 (second tab), and second projection 662 of third coupling peripheral wall 660 is located to face the main outer surface of positive electrode tab group 280 (first tab). Here, the main outer surface represents a surface of the tab having a large area, rather than the side end surface of the tab.

Although explanation for the negative electrode side with reference to figures is not described, after spacer 600 is assembled to each of the negative electrode tab group 220 (first tab) side and the negative electrode tab group 270 (second tab) side, first projection 652 of first coupling peripheral wall 650 is located to face the main outer surface of negative electrode tab group 220 (first tab) and second projection 662 of third coupling peripheral wall 660 is located to face the main outer surface of negative electrode tab group 270 (second tab).

Since each of negative electrode tab group 220, negative electrode tab group 270, positive electrode tab group 250, and positive electrode tab group 280, which serve as the first tabs and the second tabs, can be disposed in tab accommodation space 670 through communication space 680 of spacer 600 in the above-described step, spacer 600 can be readily assembled to electrode assembly 200 as compared with a case where a hole for inserting the electrode tab is provided in the spacer and the electrode tab is inserted into the hole.

It should be noted that negative electrode tab group 220 and negative electrode tab group 270 are preferably inserted into tab accommodation space 670 through communication space 680 with one stacking end surface of negative electrode tab group 220 (surface at which the end side surfaces of the negative electrode tabs are disposed) and one stacking end surface of negative electrode tab group 270 (surface at which the end side surfaces of the negative electrode tabs are disposed) being inserted first. Thus, damage of each of negative electrode tab group 220 and negative electrode tab group 270 can be effectively suppressed. Further, after inserting negative electrode tab group 220 and negative electrode tab group 270 into tab accommodation space 670, first guide portion G1 faces the main outer surface of negative electrode tab group 220, and second guide portion G2 faces the main outer surface of negative electrode tab group 270.

Then, after spacers 600 are assembled to electrode assembly 200 on the negative electrode side and the positive electrode side, the both sides of insulating sheet 700 are bent in directions of arrows R4 in Fig. 21 so as to cover electrode assembly 200 and spacers 600 on the both sides with insulating sheet 700. Thus, electrode assembly 200 and spacers 600 on the both sides are covered with insulating sheet 700 with spacers 600 being disposed on the both sides with respect to electrode assembly 200.

Since spacers 600 are also covered with insulating sheet 700, the negative electrode tab groups and the positive electrode tab groups located inside spacers 600 can be more firmly protected.

Insulating sheet 700 is fixed to spacers 600 on the both sides. In order to fix insulating sheet 700 to each of spacers 600, welding, adhesion, fixing by tape, or the like may be used.

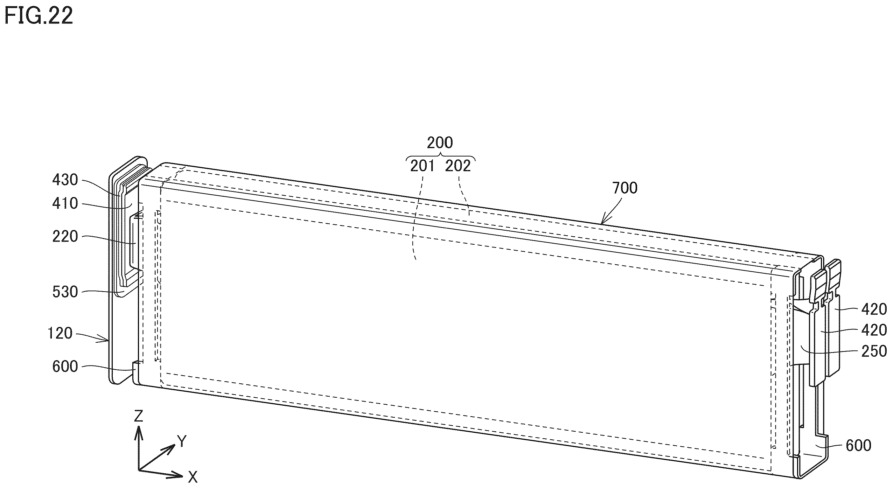

As shown in Fig. 22, insulating sheet 700 according to the present embodiment covers the entire periphery of each of electrode assembly 200 and spacer 600 in the axial direction in the X direction. Insulating sheet 700 does not necessarily need to cover a whole of the surfaces of electrode assembly 200. Insulating sheet 700 preferably covers an area of about 50% or more, more preferably about 70% or more, of the outer surfaces of the electrode assembly. Insulating sheet 700 preferably covers a whole of at least four surfaces of the six surfaces of electrode assembly 200 having a substantially rectangular parallelepiped shape (flat shape) other than the two surfaces thereof on which negative electrode tab group 220 and positive electrode tab group 250 are formed respectively. Each of protuberances 627, 628, 647, 648 provided in spacers 600 is preferably exposed from insulating sheet 700.

As shown in Fig. 22, next, current collector 410 is electrically connected to negative electrode terminal 301 with current collector 430 being interposed therebetween (step S6). Step S6 can be performed before step S5.

Specifically, as shown in Fig. 22, negative electrode tab group 220 and negative electrode tab group 270 are folded such that tip portions 222, 272 face each other.

Each of negative electrode terminal 301 and current collector 430 is attached to sealing plate 120 with an insulating member being interposed therebetween. Current collector 430 is brought into abutment with current collector 410 in the X direction. The connecting of plate-shaped member 303 to negative electrode terminal 301 may be performed at any timing. Current collector 430 and current collector 410 are joined to each other by laser welding from between sealing plate 120 and insulating sheet 700.

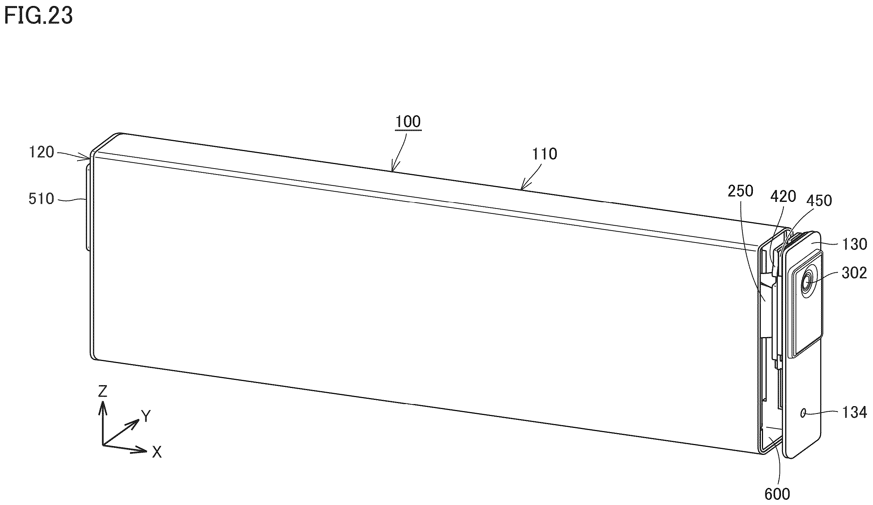

Next, as shown in Fig. 23, spacer 600 and electrode assembly 200 are inserted into case main body 110 via opening 113 with the current collector 420 side being inserted first (step S7).

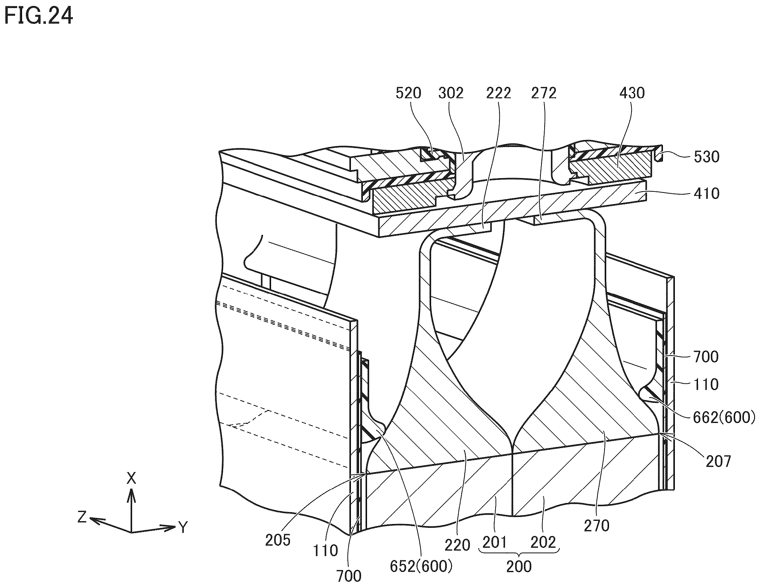

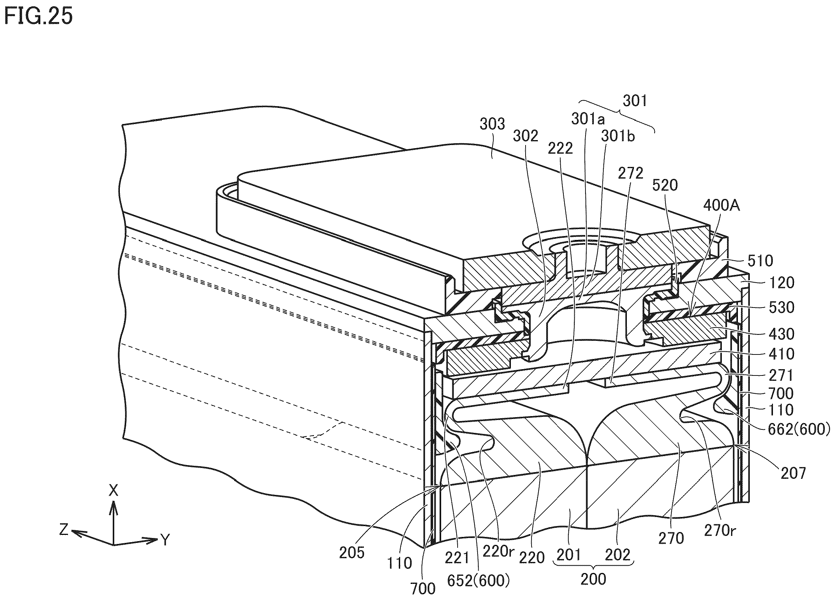

Next, as shown in Fig. 24, negative electrode tab group 220 and negative electrode tab group 270 are curved by bringing sealing plate 120 close to the main body portion of electrode assembly 200 (first electrode assembly 201 and second electrode assembly 202) from the state in which negative electrode tab group 220 and negative electrode tab group 270 are extended (state shown in Fig. 25). Negative electrode tab group 220 and negative electrode tab group 270 are curved along the shape of spacer 600 such that the folded portions of curved portions 221, 271 are close to case main body 110 in the Y direction.

After bringing sealing plate 120 into abutment with case main body 110, sealing plate 120 is temporarily joined to case main body 110. By the temporary joining, sealing plate 120 is partially joined to opening 113 of case main body 110. Thus, sealing plate 120 is positioned with respect to case main body 110.

When inserting electrode assembly 200 into case main body 110, electrode assembly 200 may be pulled from the current collector 420 side, or may be pushed from the current collector 410 side. When electrode assembly 200 is pushed from the current collector 410 side, negative electrode tab group 220 and negative electrode tab group 270 can be curved at the same time.

In the step of curving negative electrode tab group 220 and negative electrode tab group 270 (curving step), negative electrode tab group 220 and negative electrode tab group 270 are curved in a state in which first coupling peripheral wall 650 faces the main outer surface of negative electrode tab group 220 (first tab) and third coupling peripheral wall 660 faces the main outer surface of negative electrode tab group 270 (second tab). In this way, each of negative electrode tab group 220 and negative electrode tab group 270 can be effectively suppressed from being deformed into an unintended shape such as a shape in which each negative electrode tab group is greatly deformed outward to partially come into contact with the inner surface of case main body 110.

It should be noted that more preferably, negative electrode tab group 220 and negative electrode tab group 270 are curved in a state in which first coupling peripheral wall 650 is in abutment with the main outer surface of negative electrode tab group 220 and third coupling peripheral wall 660 is in abutment with the main outer surface of negative electrode tab group 270. Thus, each of negative electrode tab group 220 and negative electrode tab group 270 can be facilitated to be curved into a predetermined shape.

Moreover, negative electrode tab group 220 and negative electrode tab group 270 are further preferably curved in a state in which first projection 652 provided in first coupling peripheral wall 650 is in abutment with the main outer surface of negative electrode tab group 220 and second projection 662 provided in third coupling peripheral wall 660 is in abutment with the main outer surface of negative electrode tab group 270.

As a result, as shown in Fig. 25, after sealing plate 120 is positioned with respect to case main body 110, negative electrode tab group 220 (first tab) is provided with first recess 220r recessed to the negative electrode tab group 270 (second tab) side in the curved state, and negative electrode tab group 270 (second tab) is provided with second recess 270r recessed to the negative electrode tab group 220 (first tab) side in the curved state.

Further, first projection 652 of first coupling peripheral wall 650 is disposed in first recess 220r, and second projection 662 of third coupling peripheral wall 660 is disposed in second recess 270r.

By providing first projection 652 at a position facing the main outer surface of negative electrode tab group 220 (first tab) and providing second projection 662 at a position facing the main outer surface of negative electrode tab group 270 (second tab), each of negative electrode tab group 220 and negative electrode tab group 270 can be readily curved into a predetermined shape, thereby improving the assemblability of the secondary battery.

Next, after electrode assembly 200 is inserted into case main body 110, current collector 420 is electrically connected to positive electrode terminal 302 (step S8).

Specifically, positive electrode terminal 302 is attached to sealing plate 130 with an insulating member being interposed therebetween. After inserting first electrode assembly 201 and second electrode assembly 202 into case main body 110, current collector 450 is brought into abutment, in the X direction, with current collector 420 protruding from opening 114. The connecting of plate-shaped member 304 to positive electrode terminal 302 may be performed at any timing.

Positive electrode tab group 250 and positive electrode tab group 280 connected to current collector 420 are folded such that tip portions 252, 282 face each other. As shown in Fig. 12, positive electrode tab group 250 and positive electrode tab group 280 are curved along the shape of spacer 600 such that the folded portions of curved portions 251, 281 are close to case main body 110 in the Y direction.

Also in the step of curving positive electrode tab group 250 and positive electrode tab group 280 on the positive electrode side, based on the same step as that for negative electrode tab group 220 and negative electrode tab group 270 on the negative electrode side, first projection 652 is provided at a position facing the main outer surface of positive electrode tab group 280 (first tab) and second projection 662 is provided at a position facing the main outer surface of positive electrode tab group 250 (second tab), with the result that positive electrode tab group 250 and positive electrode tab group 280 can be readily promoted to be deformed into a predetermined curved shape and the assemblability of the secondary battery can be improved.

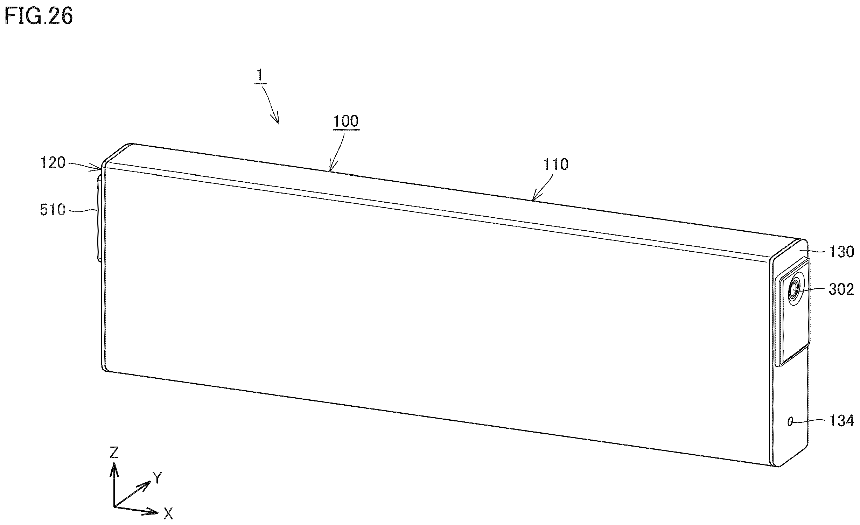

As shown in Fig. 26, after spacer 600 and electrode assembly 200 are inserted into case main body 110, sealing plate 130 (first sealing plate) and sealing plate 120 (second sealing plate) are joined to case main body 110 (step S9).

Specifically, after sealing plate 130 is brought into abutment with case main body 110, sealing plate 130 is temporarily welded to case main body 110. By the temporary joining, sealing plate 130 is partially joined to opening 114 of case main body 110. Thus, sealing plate 130 is positioned with respect to case main body 110.

Next, sealing plate 120 and sealing plate 130 are joined to case main body 110. Sealing plate 120 seals opening 113 of case main body 110, and sealing plate 130 seals opening 114 of case main body 110. Thus, first electrode assembly 201 and second electrode assembly 202 are accommodated in case 100.

After the above-described steps, an inspection such as a leakage inspection is performed (step S10). After the leakage inspection, secondary battery 1 is dried to remove moisture in case 100.

Next, the electrolyte solution is injected into case 100 via the injection hole provided in sealing plate 130 (second sealing plate) in a state in which sealing plate 130 (second sealing plate) is disposed on the upper side with respect to sealing plate 120 (first sealing plate) and spacer 600 (first spacer) is disposed on the lower side with respect to electrode assembly 200 in the vertical direction (step S11). Since spacer 600 is provided around the portion via which the electrolyte solution is injected, electrode assembly 200 or the like is suppressed from being damaged even when the electrolyte solution is vigorously injected into case 100. Thus, in secondary battery 1 according to the present embodiment, the electrolyte solution can be injected in a shorter period of time than that in a case where spacer 600 is not provided.

During the injection, an angle of the main surface of the sealing plate with respect to the vertical direction is preferably about 90±45° with respect to the vertical direction. During the injection, the main surface of the sealing plate is more preferably perpendicular to the vertical direction.

The weight of electrode assembly 200 disposed in case 100 is preferably 500 g or more, and is more preferably 1 kg or more. The weight of electrode assembly 200 is a weight in a state in which no electrolyte solution is included therein. When there are a plurality of electrode assemblies 200, the weight of electrode assembly 200 means the total weight of electrode assemblies 200. Even though electrode assembly 200 is heavy, electrode assembly 200 can be supported by spacer 600 (first spacer).

Thereafter, charging is performed to result in release of gas. For performing the charging to result in release of gas, injection hole 134 may be temporarily sealed. Thereafter, injection hole 134 is sealed, thereby completing secondary battery 1.

In each of secondary battery 1 and the method of manufacturing secondary battery 1 according to the first embodiment of the present technology, the first tab and the second tab can be disposed in tab accommodation space 670 through communication space 680 of spacer 600.

As a result, spacer 600 can be readily assembled to electrode assembly 200 as compared with a case where a hole for inserting the electrode tab is provided in the spacer and the electrode tab is inserted into the hole. As a result, the assemblability of the secondary battery can be improved, thereby providing a secondary battery having high reliability.

It should be noted that since the electrode tab is disposed between first base portion 610 and each of second coupling peripheral wall 651 and fourth coupling peripheral wall 661 in spacer 600, when force is applied from spacer 600 to electrode assembly 200, the force applied from spacer 600 to electrode assembly 200 can be distributed, thereby suppressing damage of the end portion of electrode assembly 200.

It should be noted that since spacer 600 is provided between each of the sealing plates on the both sides and electrode assembly 200, electrode assembly 200 can be sandwiched between spacers 600 on the both sides, thereby suppressing movement of electrode assembly 200 in case 100.

It should be noted that in the step of injecting the electrolyte solution, the electrolyte solution is injected into case 100 via injection hole 134 in a state in which spacer 600 is disposed below electrode assembly 200, thereby suppressing deformation of spacer 600 to stably support electrode assembly 200. Thus, the electrode tab and electrode assembly 200 can be suppressed from being damaged. Moreover, since electrode assembly 200 can be stably supported, even when the speed of injecting the electrolyte solution becomes fast, electrode assembly 200 is not needlessly moved inside case 100 and the electrolyte solution can be therefore injected in a short period of time, thereby improving an injection property for the electrolyte solution.

In the method of manufacturing secondary battery 1 according to the first embodiment of the present technology, since electrode assembly 200 and spacer 600 are covered with insulating sheet 700, insulating sheet 700, which is slippery, is located on the outer peripheral side, thereby facilitating the insertion of electrode assembly 200 and spacer 600 into case main body 110. With insulating sheet 700, the electrode tab and electrode assembly 200 can be effectively suppressed from being damaged.

### (Other Embodiments)

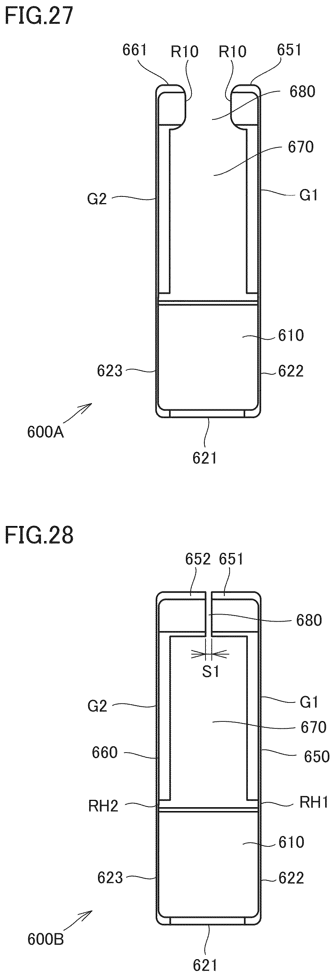

Other embodiments of the spacer will be described below with reference to Figs. 27 to 31.

### (Second Embodiment: Spacer 600A)

An implementation of a spacer 600A according to a second embodiment will be described with reference to Fig. 27. The basic configuration of spacer 600A is the same as that of spacer 600 described above. In spacer 600A, curved surfaces R10 are respectively provided at surfaces of second coupling peripheral wall 651 and fourth coupling peripheral wall 661 facing each other.

By providing curved surfaces R10 at second coupling peripheral wall 651 and fourth coupling peripheral wall 661, it is possible to smoothly move the first tab and the second tab and suppress occurrence of damage of each of the first tab and the second tab even when the first tab and the second tab are brought into contact with second coupling peripheral wall 651 and fourth coupling peripheral wall 661 at the time of disposing the first tab and the second tab in tab accommodation space 670 through communication space 680.

### (Third Embodiment: Spacer 600B)

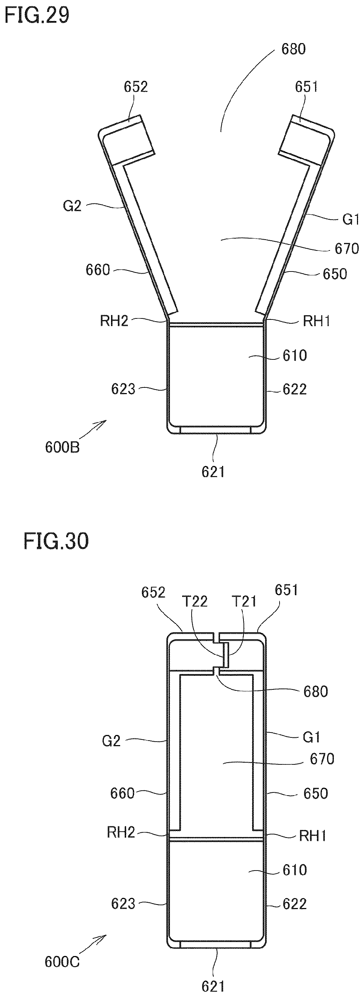

An implementation of a spacer 600B according to a third embodiment will be described with reference to Figs. 28 and 29. The basic configuration of spacer 600B is the same as that of spacer 600 described above. In spacer 600B, a coupling portion between second peripheral wall 622 and first coupling peripheral wall 650 is provided to be movable, by using a hinge RH1 constituted of a member thinner than each of members therearound, in a direction (first state/see Fig. 28) in which first guide portion G1 comes closer to second guide portion G2 and a direction (second state/see Fig. 29) in which first guide portion G1 is further away from second guide portion G2.

Similarly, a coupling portion between third peripheral wall 623 and third coupling peripheral wall 660 is provided to be movable, by using a hinge RH2 constituted of a member thinner than each of members therearound, in a direction (first state/see Fig. 28) in which second guide portion G2 comes closer to first guide portion G1 and a direction (second state/see Fig. 29) in which second guide portion G2 is further away from first guide portion G1.

The thickness of each of hinge RH1 and hinge RH2 is preferably 1 mm or less. It should be noted that the structure of each of hinge RH1 and hinge RH2 is not limited to the structure in which the thickness thereof is thin, as long as a movable region to function as a hinge is provided, such as a region having a width narrower than that of each of the other regions or a region provided with a notch.

Thus, regarding spacer 600B according to the third embodiment, the first tab and the second tab can be accommodated in tab accommodation space 670 in a state in which spacer 600B can be changed in shape to increase the width of communication space 680, and then spacer 600B can be changed in shape to decrease the width of communication space 680. That is, communication space 680 can be enlarged by widening first guide portion G1 and second guide portion G2 from the first state to the second state. As a result, the first tab and the second tab can be smoothly moved to tab accommodation space 670 through communication space 680, and occurrence of damage of each of the first tab and the second tab can be suppressed.

It should be noted that when there is employed the configuration in which first guide portion G1 and second guide portion G2 are widened from the first state to the second state, a distance S1 between second coupling peripheral wall 651 and fourth coupling peripheral wall 661 at communication space 680 in the first state (see Fig. 28) can be made as small as possible.

### (Fourth Embodiment: Spacer 600C)

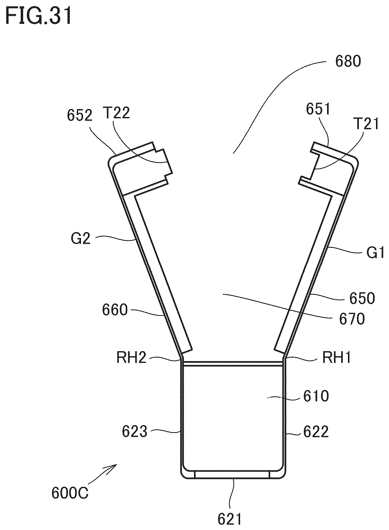

An implementation of a spacer 600C according to a fourth embodiment will be described with reference to Figs. 30 and 31. The basic configuration of spacer 600C is the same as that of spacer 600B described above, and is provided to be movable in a direction in which first guide portion G1 and second guide portion G2 come closer to each other (first state/see Fig. 30) and a direction in which they are further away from each other (second state/see Fig. 31).

Further, in spacer 600C, second coupling peripheral wall 651 and fourth coupling peripheral wall 661 are configured to be coupled to each other. Second coupling peripheral wall 651 is provided with a first engagement portion T21, and fourth coupling peripheral wall 661 is provided with a second engagement portion T22. In the present embodiment, first engagement portion T21 and second engagement portion T22 are provided to be selectable between an engagement state (Fig. 30) and a non-engagement state (Fig. 31).

For the engagement between first engagement portion T21 and second engagement portion T22, a technique such as adhesion or welding may be used in addition to fitting joining and engagement joining when it is not necessary to return to the non-engagement state after the engagement state is once selected.

Also in spacer 600C, the same functions and effects as those of spacer 600B described above can be obtained.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A method of manufacturing a power storage device,
the power storage device including:
an electrode assembly (200) including a first electrode (210) and a second electrode (240) having a polarity different from a polarity of the first electrode (210); and
a case (100) that accommodates the electrode assembly (200), wherein
the case (100) includes a case main body (110) provided with a first opening (113) at one end portion of the case main body (110), and a first sealing plate (120) that seals the first opening (113),
the electrode assembly (200) includes a first tab (220) and a second tab (270) at an end portion of the electrode assembly (200) on the first sealing plate (120) side, each of the first tab (220) and the second tab (270) being electrically connected to the first electrode (210),
a first spacer (600) is disposed between the first sealing plate (120) and the electrode assembly (200),
each of the first tab (220) and the second tab (270) is disposed in a curved state in a tab accommodation space (670) provided in the first spacer (600),
the first spacer (600) includes a first guide portion (G1) and a second guide portion (G2),
the first guide portion (G1) and the second guide portion (G2) are disposed to face each other,
the tab accommodation space (670) is disposed between the first guide portion (G1) and the second guide portion (G2),
a main outer surface of the first tab (220) faces the first guide portion (G1),
a main outer surface of the second tab (270) faces the second guide portion (G2),
the method comprising:
producing the electrode assembly (200) having the first tab (220) and the second tab (270);
after the producing the electrode assembly (200), accommodating the first tab (220) and the second tab (270) in the tab accommodation space (670) through a communication space (680) using the first spacer (600), the first spacer (600) having the communication space (680), the communication space (680) connecting the tab accommodation space (670) and a space external to the first spacer (600); and
after the accommodating the first tab (220) and the second tab (270), curving the first tab (220) and the second tab (270) in a state in which the first guide portion (G1) faces the main outer surface of the first tab (220) and the second guide portion (G2) faces the main outer surface of the second tab (270).

2. The method of manufacturing the power storage device according to claim 1, the method further comprising: before the accommodating the first tab (220) and the second tab (270), joining at least one of the first tab (220) and the second tab (270) to a current collector (410).

3. The method of manufacturing the power storage device according to claim 1 or 2, wherein
the first tab (220) is provided with a first recess (220r) recessed to the second tab (270) side in a curved state,
the second tab (270) is provided with a second recess (270r) recessed to the first tab (220) side in a curved state,
the first guide portion (G1) has a first projection (652),
the second guide portion (G2) has a second projection (662),
the first projection (652) is disposed in the first recess (220r), and
the second projection (662) is disposed in the second recess (270r).

4. The method of manufacturing the power storage device according to claim 3, wherein
the first guide portion (G1) has a first recessed curved surface portion on the first sealing plate (120) side of the first projection (652), and
the second guide portion (G2) has a second recessed curved surface portion on the first sealing plate (120) side of the second projection (662).

5. The method of manufacturing the power storage device according to any one of claims 1 to 4, the method further comprising: after the accommodating the first tab (220) and the second tab (270), inserting the electrode assembly (200) and the first spacer (600) into the case main body (110), wherein
after the inserting the electrode assembly (200) and the first spacer (600), in the curving the first tab (220) and the second tab (270), the first tab (220) and the second tab (270) are curved with the first guide portion (G1) being in abutment with the first tab (220) and the second tab (270) being in abutment with the second guide portion (G2).

6. The method of manufacturing the power storage device according to any one of claims 1 to 5, wherein
the case main body (110) is provided with a second opening (114) at the other end portion of the case main body (110), and
the second opening (114) is sealed by a second sealing plate (130).

7. The method of manufacturing the power storage device according to any one of claims 1 to 6, wherein
the first spacer (600) is disposed at one end portion of the electrode assembly (200), and
the electrode assembly (200) and the first spacer (600) are covered with an insulating sheet (700).

8. The method of manufacturing the power storage device according to claim 7, the method further comprising:
disposing the first spacer (600) on the insulating sheet (700);
after the disposing the first spacer (600) on the insulating sheet (700), disposing the first tab (220) and the second tab (270) in the tab accommodation space (670) and disposing the electrode assembly (200) on the insulating sheet (700); and
after the disposing the first tab (220) and the second tab (270) in the tab accommodation space (670) and disposing the electrode assembly (200) on the insulating sheet (700), covering the electrode assembly (200) and the first spacer (600) with the insulating sheet (700).

9. The method of manufacturing the power storage device according to any one of claims 1 to 8, wherein
in a region in which the communication space (680) is defined by the first guide portion (G1) and the second guide portion (G2), regions of the first guide portion (G1) and the second guide portion (G2) facing each other have curved shapes bulging toward each other or have shapes with chamfered corners.

10. The method of manufacturing the power storage device according to any one of claims 1 to 9, wherein
in the accommodating the first tab (220) and the second tab (270),
the first tab (220) and the second tab (270) are accommodated in the tab accommodation space (670) in a state in which the first spacer (600) is changed in shape to increase a width of the communication space (680), and
the first spacer (600) is then changed in shape to decrease the width of the communication space (680).

11. A power storage device comprising:
an electrode assembly (200) including a first electrode (210) and a second electrode (240) having a polarity different from a polarity of the first electrode (210); and
a case (100) that accommodates the electrode assembly (200), wherein
the case (100) includes a case main body (110) provided with a first opening (113) at one end portion of the case main body (110), and a first sealing plate (120) that seals the first opening (113),
the electrode assembly (200) includes a first tab (220) and a second tab (270) at an end portion of the electrode assembly (200) on the first sealing plate (120) side, each of the first tab (220) and the second tab (270) being electrically connected to the first electrode (210),
each of the first tab (220) and the second tab (270) is electrically connected to the first electrode (210) in a curved state,
a first spacer (600) is disposed between the first sealing plate (120) and the electrode assembly (200),
the first spacer (600) includes a main body portion, a first guide portion (G1), and a second guide portion (G2), the first guide portion (G1) and the second guide portion (G2) being coupled to the main body portion and being disposed to face each other,
by the first guide portion (G1) and the second guide portion (G2), a tab accommodation space (670) is defined and a communication space (680) connecting the tab accommodation space (670) and an external space is defined,
the communication space (680) is defined on a side opposite to the main body portion with the first guide portion (G1) and the second guide portion (G2) being interposed between the communication space (680) and the main body portion,
the first tab (220) is curved in a state in which the first guide portion (G1) faces a main outer surface of the first tab (220), and
the second tab (270) is curved in a state in which the second guide portion (G2) faces a main outer surface of the second tab (270).

12. The power storage device according to claim 11, wherein
the first tab (220) is provided with a first recess (220r) recessed to the second tab (270) side in a curved state,
the second tab (270) is provided with a second recess (270r) recessed to the first tab (220) side in a curved state,
the first guide portion (G1) has a first projection (652),
the second guide portion (G2) has a second projection (662),
the first projection (652) is disposed in the first recess (220r), and
the second projection (662) is disposed in the second recess (270r).

13. The power storage device according to claim 12, wherein
the first guide portion (G1) has a first recessed curved surface portion (653) on the first sealing plate (120) side of the first projection (652), and
the second guide portion (G2) has a second recessed curved surface portion (663) on the first sealing plate (120) side of the second projection (662).
